Europäisches Patentamt

(19) European Patent Office  (11) Numéro de publication: **0 115 226**

Office européen des brevets  **B1**

(12)  **FASCICULE DE BREVET EUROPEEN**

(45) Date de publication du fascicule du brevet: **20.05.87**  (51) Int. Cl.⁴: **G 21 F 9/02, B 01 D 46/42**

(21) Numéro de dépôt: **83402393.9**

(22) Date de dépôt: **12.12.83**

(54)  **Procédé et dispositif pour le remplacement d'un filtre placé dans un caisson.**

(30) Priorité: **17.12.82 FR 8221204**

(43) Date de publication de la demande:
**08.08.84 Bulletin 84/32**

(45) Mention de la délivrance du brevet:
**20.05.87 Bulletin 87/21**

(84) Etats contractants désignés:
**BE CH DE GB IT LI NL SE**

(56) Documents cités:
**FR-A-2 396 580**
**US-A-3 063 224**

(73) Titulaire: **COMMISSARIAT A L'ENERGIE
ATOMIQUE Etablissement de Caractère
Scientifique Technique et Industriel
31/33, rue de la Fédération
F-75015 Paris (FR)**

(72) Inventeur: **Lance, Jacques
10 rue de Cernay
F-68200 Mulhouse (FR)**
Inventeur: **Muller, Georges
4 rue Edmé Verniquet
F-21100 Dijon (FR)**

(74) Mandataire: **Mongrédien, André et al
c/o BREVATOME 25, rue de Ponthieu
F-75008 Paris (FR)**

EP 0 115 226 B1

**Description**

La présente invention a pour objet un procédé et un dispositif pour le remplacement d'un filtre placé dans un caisson qui donnent une meilleure accessibilité au filtre à remplacer que les dispositifs de l'art antérieur.

Dans les systèmes de ventilation utilisés actuellement, il est prévu sur les parois des gaines ou des caissons des portes de visite permettant l'accès au filtre à démonter. Dans le cas d'une gaine de dimensions peu importantes, par exemple s'il n'y a qu'un seul filtre sur le trajet de l'air, l'accessibilité à travers la porte de visite est suffisante mais, dans le cas d'une gaine de grandes dimensions, il peut y avoir plusieurs filtres côte à côte (parfois jusqu'à une dizaine) et une seule porte de visite ne donne pas une accessibilité suffisante. On peut alors prévoir plusieurs portes sur les différentes faces du caisson ou encore une ouverture de plus grandes dimensions, appelée "trou d'homme", qui permet à un opérateur de s'introduire dans le caisson pour démonter les filtres, mais cette opération n'est pas très commode.

La présente invention a justement pour but d'éliminer ces inconvénients en proposant un procédé et un dispositif pour le remplacement d'un filtre qui donnent une bien meilleure accessibilité à celui-ci que les procédés de l'art antérieur.

Selon la principale caractéristique du procédé de remplacement d'un filtre placé dans une gaine objet de l'invention, celui-ci comprend les étapes suivantes:

— on fait emboîter deux parties de la gaine l'une dans l'autre, une première desdites deux parties étant déplacée du voisinage du filtre par emboîtement pour dégager l'accessibilité au filtre de tous les côtés de la gaine,

— on remplace le filtre par un filtre neuf, et

— on ramène ladite première partie de la gaine à sa position initiale.

Suivant une autre caractéristique de ce procédé, après avoir remplacé le filtre par un filtre neuf, on applique ce dernier sur un cadre ou une tôle à l'aide d'au moins une barre comportant au moins une came pouvant coopérer avec la face du filtre opposée au cadre.

Dans un mode de mise en oeuvre préféré, on interpose, entre ladite face du filtre et les cames, un cadre de serrage afin de mieux répartir l'effort exercé par les cames.

L'invention a également pour objet un dispositif pour la mise en oeuvre de ce procédé.

Selon la principale caractéristique de ce dispositif, celui-ci comporte une gaine qui contient un filtre, la gaine ayant deux parties qui peuvent être emboîtées l'une dans l'autre pour dégager l'accessibilité au filtre de tous les côtés de la gaine, une première desdites deux parties comportant, à chacune de ses extrémités, des moyens permettant de la fixer de manière étanche sur des parties fixes de la gaine situées au voisinage du filtre.

Ladite première partie de la gaine peut être de section quelconque, rectangulaire, circulaire ou autre.

Suivant une autre caractéristique du dispositif objet de l'invention, celui-ci comprend au moins une cornière dont les extrémités sont reliées à des parties fixes de la gaine, une partie au moins de ladite cornière se trouvant au voisinage du filtre.

Pour appliquer le filtre sur le cadre ou la tôle précité, le dispositif comporte également au moins une barre comportant au moins une came pouvant coopérer avec la face du filtre opposée au cadre.

Dans ce cas, chacune des cornières mentionnées ci-dessus comporte au moins une échancrure dans laquelle peut venir se loger une extrémité de ladite barre.

Enfin, le dispositif peut comporter un cadre de serrage interposé entre le filtre et les cames afin de répartir l'effort exercé par ces dernières sur le filtre.

L'invention apparaîtra mieux à la lecture de la description qui va suivre, donnée à titre purement illustratif et nullement limitatif, en référence aux dessins annexés dans lesquels:

— la figure 1 est une vue schématique en coupe verticale d'un élément de gaine contenant un dispositif conforme à l'invention,

— la figure 2 est une vue schématique en perspective avec arrachement partiel du dispositif représenté à la figure 1, et

— la figure 2a est une vue suivant la flèche F2 de la figure 2 et illustrant le mode de fixation dans les cornières des barres servant à appliquer les filtres sur un cadre ou une tôle.

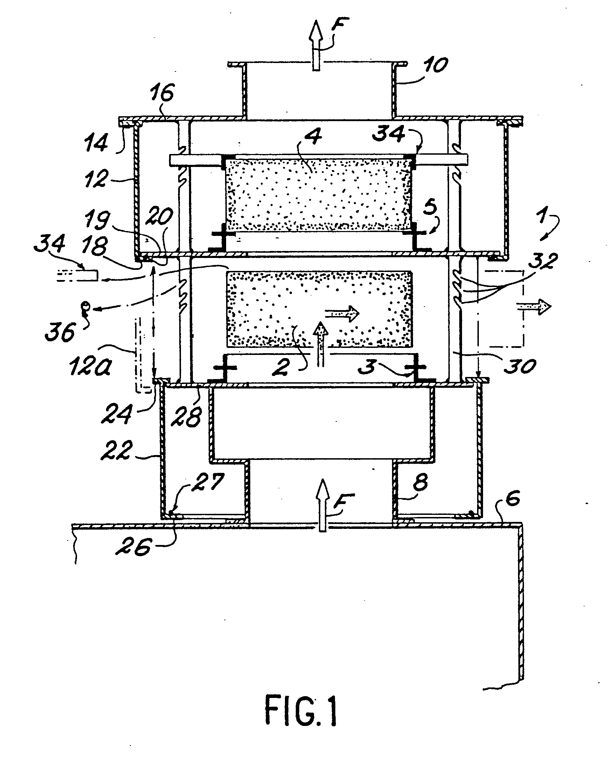

Sur la figure 1, on voit un élément de gaine ou caisson, portant la référence générale 1, et qui contient deux filtres 2 et 4 servant à filtrer l'air pollué provenant d'un local 6. L'élément de gaine 1 est relié au local 6 par un manchon d'entrée 8 et à un dispositif d'extraction (non représenté) par un manchon de sortie 10. Dans le cas particulier décrit ici, l'air présent dans le local 6 contient des poussières radioactives qui sont arrêtées par le premier filtre 2 tandis que le deuxième filtre 4 sert à filtrer d'autres produits, notamment des iodures. Les faces amont des filtres 2 et 4 sont appliquées de manière étanche sur des cadres 3 et 5 respectivement: ceci permet, notamment pour le filtre 2, de le remplacer sans rupture du confinement de la zone contaminée, par exemple grâce au procédé décrit dans la demande de brevet FR—A—2 488 436.

Sur la figure, on voit que le filtre 4 est entouré d'une tôle 12 se présentant sous la forme d'un élément creux permettant le passage de l'air et dont la section droite, perpendiculairement au sens de l'air symbolisé par les flèches F, est rectangulaire. On voit que l'élément 12 est équipé à sa partie supérieure d'un cadre 14 qui peut être boulonné de manière étanche sur une tôle 16 fixe par rapport au caisson 1. A sa partie inférieure, la tôle 12 comporte un autre cadre 18 qui peut être appliqué de manière étanche sur une tôle 19 également fixe par rapport au caisson 1. Si le cadre 14 est boulonné sur la tôle 16, le cadre 18 est simplement appliqué contre la tôle 19 par l'intermédiaire d'un joint 20. Les dimensions de l'élément mobile 12 par rapport à la distance entre les tôles 16 et 19 sont calculées de telle sorte que le boulonnage du cadre 14 sur la tôle 16 entraîne l'application de manière étanche du cadre 18 sur la tôle 19.

Lorsqu'on désire remplacer le filtre 4, on déboulonne le cadre 14 de la tôle 16 et on fait glisser la partie 12 de la gaine 1 vers le bas: elle vient dans une position 12a représentée schématiquement en traits mixtes sur la figure. Ceci a pour effet de dégager complètement l'accessibilité au filtre 4 de tous les côtés de la gaine 1 et il est ainsi plus facile de procéder au démontage du filtre usagé 4 et à son remplacement par un filtre neuf. De même, lorsqu'on désire remplacer le filtre inférieur 2, on fait glisser vers le bas la tôle 22 qui entoure celui-ci en position normale de fonctionnement et qui est représentée en position de démontage sur la figure 1. On voit que la tôle 22 comporte à sa partie supérieure un cadre 24 qui peut être boulonné sur la tôle 19 dont il a été fait mention plus haut, ce boulonnage ayant pour effet d'appliquer le cadre inférieur 26 de l'élément 22 sur la tôle 28 de la gaine 1, l'étanchéité étant assurée par un joint 27: l'élément 22 est donc fixé sur les tôles 19 et 28 de la même façon que l'élément 12 est fixé sur les tôles 16 et 19. Ainsi, l'accès au filtre 2 étant parfaitement dégagé, on peut procéder au remplacement de celui-ci en utilisant, dans le cas où l'air du local 6 contient des poussières radioactives, la méthode décrite dans la demande de brevet français mentionnée plus haut. Cette méthode n'est cependant pas utile pour le remplacement du filtre 4 puisque celui-ci se trouve en zone non contaminée.

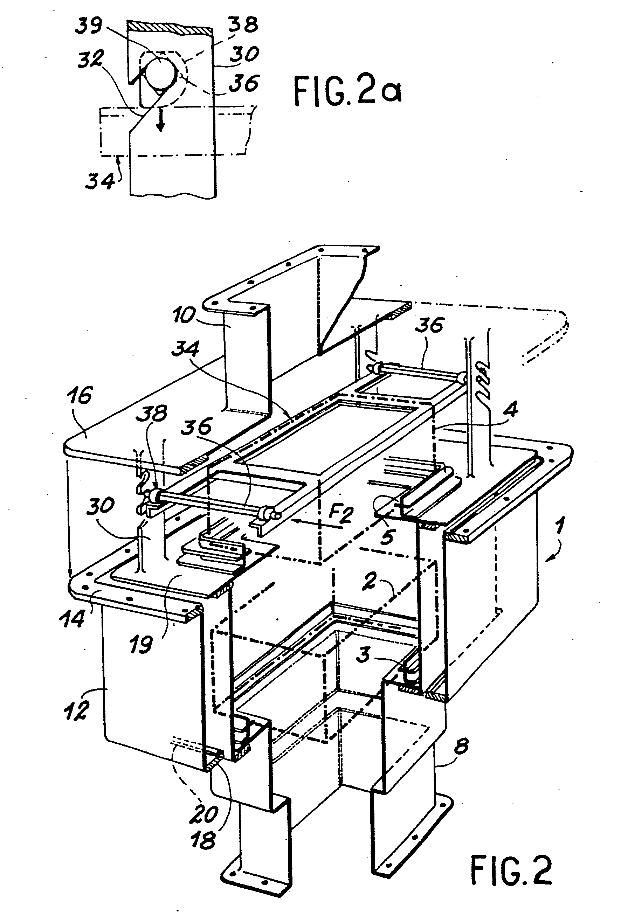

Un autre aspect de l'invention concerne le serrage des filtres neufs sur les cadres 3 et 5. On voit sur la figure 1 que les tôles 28 et 19 d'une part, 19 et 16 d'autre part sont reliées par des barres rigides ou cornières telles que 30. Chacune des cornières 30 comporte une ou plusieurs échancrures 32 dans lesquelles viennent se loger les extrémités de barres munies de cames servant à appliquer les filtres 2 et 4 sur les cadres 3 et 5 respectivement et qui seront décrites en détail ci-après en référence à la figure 2.

Sur la figure 1, on a représenté le filtre 2 en position de démontage prêt à être extrait de la gaine 1: les barres d'appui telles que 36 ont donc été retirées ainsi que le cadre de serrage 34, ces éléments étant représentés schématiquement à gauche de la figure. Le rôle du cadre 34 sera explicité ci-après en référence à la figure 2. Le filtre 4 a été représenté en position normale de fonctionnement, c'est-à-dire appliqué sur le cadre 5: on a également représenté le cadre 34 par l'intermédiaire duquel les barres munies des cames exercent l'effort de pression sur le filtre 4.

Ces dispositions apparaissent mieux sur la vue en perspective de la figure 2 où l'on retrouve le caisson 1 avec, à sa partie inférieure, le manchon d'entrée 8 et, à sa partie supérieure, le manchon de sortie 10. On voit également le filtre 2 représenté schématiquement en traits mixtes, appliqué de manière étanche sur le cadre 3 et, au-dessus, le filtre 4 appliqué de manière étanche sur le cadre 5. On a représenté sur la figure 2 la position correspondant au remplacement du filtre 4, c'est-à-dire avec l'élément 12 en position abaissée, le cadre 14 ayant été désolidarisé de la tôle supérieure 16. On voit également sur la figure les cornières 30, correspondant au filtre supérieur 4, dont les extrémités sont rigidement liées aux tôles 19 et 16. On peut utiliser des fers plats comme sur la figure, ou des tôles pliées, ou des éléments de forme quelconque pourvu qu'ils présentent une bonne rigidité. On voit encore le cadre 34 qui est fait de cornières ou de tôles pliées et dont la forme et les dimensions sont telles qu'il épouse la forme du filtre 4. L'application de ce dernier sur le cadre 5 est obtenue grâce à deux barres 36 comportant chacune deux cames telles que 38 pouvant coopérer avec le cadre 34. Les extrémités des barres 36 sont logées dans les échancrures 32 des cornières 30.

La figure 2a illustre la position de l'extrémité des barres 36 dans les échancrures 32. On voit sur cette figure que la barre 36, de section carrée, comporte à chacune de ses extrémités une partie cylindrique 39 dont les dimensions correspondant exactement à celles du fond de l'échancrure 32. On voit que, lorsqu'on tourne la barre 36 en position de serrage, la came 38 appuie sur le cadre 34, ce qui a pour effet de repousser vers le haut la barre 36 et donc de bloquer l'extrémité 39 de celle-ci dans la partie supérieure de l'échancrure 32.

Ainsi, le procédé et le dispositif de l'invention présentent des avantages particulièrement intéressants puisqu'ils permettant d'avoir une excellente accessibilité au filtre à démonter. En effet, il n'y a plus de porte de visite et, puisqu'on fait glisser un élément de la gaine, on peut accéder au filtre de n'importe quel côté. D'autre part, on gagne du temps par le fait qu'un seul des cadres des éléments mobiles se boulonne sur les parties fixes de la gaine, le serrage de l'autre étant effectué automatiquement par le boulonnage du premier. Enfin, l'utilisation de barres avec des cames assure une application efficace du filtre sur les cadres tels que 3 et 5 par une méthode simple et rapide, tandis que l'utilisation d'un cadre de serrage permet de répartir l'effort exercé par les cames: celles-ci ne sont donc pas en contact direct avec le filtre et ne risquent pas de le détériorer.

Enfin, il est bien entendu que l'invention ne se limite pas au seul exemple de réalisation qui vient d'être décrit, mais qu'on peut envisager des variantes. Par exemple, si dans le mode de réalisation décrit ici les parties mobiles de la gaine se déplacent vers l'amont, on peut très bien envisager une disposition dans laquelle elles se déplacent vers l'aval, pourvu que les dimensions de la gaine en cet endroit permettent ce mouvement. L'invention s'applique également dans le cas de gaines de dimensions plus importantes où il y a plusieurs filtres tels que 2 et 4 placés côte à côte. Quant à la section des éléments mobiles, elle peut être quelconque, carrée, rectangulaire ou même circulaire en fonction de la nature des gaines et des filtres utilisés. Enfin, si on a décrit l'invention dans le cas où les filtres sont appliqués de manière étanche sur des cadres, elle est utilisable pour d'autres types de montage, par exemple dans le cas de filtres montés en glissière.

## Revendications

1. Procédé de remplacement d'un filtre (4) placé dans une gaine (1), caractérisé en ce qu'il comporte les étapes suivantes:
— on fait emboîter deux parties (12, 22) de la gaine l'une dans l'autre, une première desdites deux parties étant déplacée du voisinage du filtre (4) par emboîtement pour dégager l'accessibilité au filtre de tous les côtés de la gaine (1),
— on remplace le filtre (4) par un filtre neuf, et
— on ramène ladite première partie de la gaine (1) à sa position initiale.

2. Procédé selon la revendication 1, caractérisé en ce qu'après avoir remplacé le filtre (4) par un filtre neuf, on applique ce dernier sur un cadre ou une tôle (5) à l'aide d'au moins une barre (36) comportant au moins une came (38) pouvant coopérer avec la face du filtre opposée au cadre (5).

3. Procédé selon la revendication 2, caractérisé en ce qu'on interpose, entre ladite face du filtre et les cames (38), un cadre de serrage (34) afin de mieux répartir l'effort exercé par les cames (38).

4. Dispositif pour la mise en oeuvre du procédé selon l'une quelconque des revendications 1 à 3, caractérisé en ce qu'il comporte une gaine (1) qui contient un filtre (4), la gaine ayant deux parties (12, 22) qui peuvent être emboîtées l'une dans l'autre pour dégager l'accessibilité au filtre de tous les côtés de la gaine, une première desdites deux parties comportant, à chacune de ses extrémités, des moyens (14, 18) permettant de la fixer de manière étanche sur des parties fixes (16, 19) de la gaine située au voisinage du filtre.

5. Dispositif selon la revendication 4, caractérisé en ce que ladite première partie est de section droite rectangulaire.

6. Dispositif selon la revendication 4, caractérisé en ce que ladite première partie est de section droite circulaire.

7. Dispositif selon l'une quelconque des revendications 4 à 6, caractérisé en ce qu'il comprend au moins une cornière (30) dont les extrémités sont reliées à des parties fixes de la gaine (1), une partie au moins de ladite cornière (30) se trouvant au voisinage du filtre (4).

8. Dispositif selon l'une quelconque des revendications 4 à 7, caractérisé en ce qu'il comprend au moins une barre (36) comportant au moins une came (38) pouvant coopérer avec la face du filtre (4) opposée au cadre (5).

9. Dispositif selon les revendications 7 et 8, caractérisé en ce que chaque cornière (30) comporte au moins une échancrure (32) dans laquelle peut venir se loger une extrémité de ladite barre (36).

10. Dispositif selon la revendication 9, caractérisé en ce qu'il comporte en outre un cadre de serrage (34) interposé entre le filtre (4) et les cames (38) afin de répartir l'effort exercé par ces dernières sur le filtre (4).

## Patentansprüche

1. Verfahren zum Ersetzen eines in einem Gehäuse (1) angeordneten Filters (4), gekennzeichnet durch die folgenden Schritte:
— man läßt zwei Teile (12, 22) des Gehäuses ineinandergleiten, wobei das erste der beiden Teile aus der Umgebung des Filters (4) durch den Gleitvorgang entfernt wird, um den Zugang zum Filter von allen Seiten des Gehäuses (1) aus freizugeben,
— man ersetzt den Filter (4) durch einen neuen Filter und
— man bringt das erste Teil des Gehäuses (1) in seine Ursprungsstellung zurück.

2. Verfahren nach Anspruch 1, dadurch gekennzeichnet, daß nach dem Ersetzen des Filters (4) durch einen neuen Filter letzterer auf einem Rahmen oder einem Blech (5) angeordnet wird, mittels wenigstens eines Stabes (36), der wenigstens einen Nocken (38) aufweist, der mit der dem Filter gegenüberliegenden Fläche des Rahmens (5) zusammenwirken kann.

3. Verfahren nach Anspruch 2, dadurch gekennzeichnet, daß zwischen der Filterfläche und den Nocken (38) ein Klemmrahmen (34) eingesetzt wird, um die von den Nocken (38) ausgeübte Kraft besser zu verteilen.

4. Vorrichtung zur Durchführung des Verfahrens nach einem der Ansprüche 1 bis 3, dadurch gekennzeichnet, daß sie ein Gehäuse (1) mit einem Filter (4) aufweist, wobei das Gehäuse zwei Teile (12, 22) besitzt, die ineinandergleiten können, um so den Zugang zum Filter von allen Seiten des Gehäuses aus freizugeben und wobei das erste der beiden Teile an jedem Ende eine Anordnung (14, 18) aufweist, um es in dichter Weise an den in der Nähe des Filters vorgesehenen festen Teilen (16, 19) des Gehäuses zu befestigen.

5. Vorrichtung nach Anspruch 4, dadurch gekennzeichnet, daß das erste Teil einen rechtwinkligen ebenen Querschnitt aufweist.

6. Vorrichtung nach Anspruch 4, dadurch gekennzeichnet, daß das erste Teil einen kreisförmigen ebenen Querschnitt aufweist.

7. Vorrichtung nach einem der Ansprüche 4 bis 6, dadurch gekennzeichnet, daß sie wenigstens ein Winkelprofil (30) aufweist, dessen Enden mit den feststehenden Teilen des Gehäuses (1) verbunden sind, wobei wenigstens ein Abschnitt des Winkelprofils (30) sich in der Nähe des Filters (4) befindet.

8. Vorrichtung nach einem der Ansprüche 4 bis 7, dadurch gekennzeichnet, daß sie wenigstens einen Stab (36) aufweist, der mit wenigstens einem Nocken (38) versehen ist, der mit der dem Filter (4) gegenüberliegenden Fläche des Rahmens (5) zusammenwirken kann.

9. Vorrichtung nach Ansprüchen 7 und 8, dadurch gekennzeichnet, daß jedes Winkelprofil (30) wenigstens eine Kerbe (32) aufweist, in die ein Ende des Stabes (36) eingreifen kann.

10. Vorrichtung nach Anspruch 9, dadurch gekennzeichnet, daß sie außerdem einen Klemmrahmen (34) aufweist, der zwischen dem Filter (4) und den Nocken (38) eingesetzt ist, um so die von der letzteren auf den Filter (4) ausgeübte Kraft zu verteilen.

**Claims**

1. Method of replacing a filter (4) arranged in a shaft (1), characterized in that it involves the following steps:
  — two parts (12, 22) of the shaft are engaged in one another, a first of the said two parts being shifted away from the vicinity of the filter (4) as a result of engagement, thereby allowing access to the filter from all sides of the shaft (1),
  — the filter (4) is replaced by a new filter, and
  — the said first part of the shaft (1) is returned to its initial position.

2. Method according to Claim 1, characterized in that, after the filter (4) has been replaced by a new filter, the latter is placed on a frame or a metal sheet (5) by means of at least one bar (36) having at least one cam (38) which can interact with the face of the filter opposite the frame (5).

3. Method according to Claim 2, characterized in that a clamping frame (34) is inserted between the said face of the filter and the cams (38), in order to distribute more effectively the force exerted by the cams (38).

4. Device for carrying out the method according to any one of Claims 1 to 3, characterized in that it comprises a shaft (1) containing a filter (4), the shaft having two parts (12, 22) which can be engaged in one another so as to allow access to the filter from all sides of the shaft, a first of the said two parts having, at each of its ends, means (14, 18) making it possible to fasten it in a sealed manner to fixed parts (16, 19) of the shaft which are located near the filter.

5. Device according to Claim 4, characterized in that the said first part is of rectangular cross-section.

6. Device according to Claim 4, characterized in that the said first part is of circular cross-section.

7. Device according to any one of Claims 4 to 6, characterized in that it possesses at least one bracket (30), the ends of which are connected to fixed parts of the shaft (1), at least part of the said bracket (30) being located near the filter (4).

8. Device according to any one of Claims 4 to 7, characterized in that it possesses at least one bar (36) having at least one cam (38) which can interact with the face of the filter (4) opposite the frame (5).

9. Device according to Claims 7 and 8, characterized in that each bracket (30) has at least one notch (32), in which one end of the said bar (36) can be seated.

10. Device according to Claim 9, characterized in that it also possesses a clamping frame (34) inserted between the filter (4) and the cams (38), in order to distribute the force exerted by the latter on the filter (4).

FIG.1

FIG.2a

FIG.2